# EUROPEAN PATENT APPLICATION

(11) **EP 3 059 128 A1**
(43) Date of publication of application: **24.08.2016**
(21) Application number: 15155818.6
(22) Date of filing: 19.02.2015
(51) Int. Cl.: B60S 5/02, A62C 3/06, A62C 13/78, B67D 7/06

(54) **Emergency solution for unmanned patrol stations**

(71) Applicant: Scheidt & Bachmann GmbH, 41238 Mönchengladbach (DE)
(72) Inventor: Jacques, Ian, Downend, Bristol BS16 6XG (GB); Read, James, Alton, Hampshire GU34 2LE (GB)
(74) Representative: Stenger Watzke Ring

(57) **Abstract**

The invention relates to a system to provide an emergency solution for the operation of unmanned petrol stations equipped with fuel dispensers on a forecourt accessible to road vehicles, the system including a manned emergency centre and an emergency cabinet at the site of the unmanned petrol station which cabinet includes communication units for the communication with the emergency centre and means for provisioning firefighting materials.

## Description

The present invention relates to the area of petrol stations, specifically to unmanned petrol stations.

An "unmanned" petrol station is a petrol filling station that is designed and constructed so as to function without the day-to-day presence of staff, other than for routine safety/security checks, cleaning and scheduled maintenance work etc. At unmanned sites, the customers operate the dispensing equipment without the supervision of a trained attendant.

Petrol filling stations - or short "petrol stations" - in the terms of this invention are stations to refill road-vehicles with fluid or gaseous fuel. Petrol stations are equipped with dispensers which pump the fuel from underground tanks through a hose and a nozzle into the tank of the respective vehicle.

An automated fire extinguishing system for self-serviced petrol stations is published in JP 11 333 017 A. This system includes a nitrogene gas vessel filled with high pressure nitrogene gas to pressurize the inside of another vessel so as to pressure feed a fire extinguishing agent within this other vessel.

Apart from that, there are no emergency solutions known for unmanned petrol stations.

For example, in the United Kingdom, the operation of unmanned petrol stations has to fulfil requirements which are set forth in the "Petrol Filling Stations Guidance on Managing The Risks Of Fire & Explosion" (known as "The Red Guide"), published by the Energy Institute. Amongst other, the Red Guide requires that in case of an emergency a trained person shall be on the forecourt within 5 minutes.

As a result of this requirement, truly unmanned 24/7 petrol stations do not exist in the UK. There are quasi-unmanned petrol stations next to supermarkets and shopping centres, from where trained personnel are available within 5 minutes in case of emergency during the opening of the shop(s).

On the basis of this state of the art, it is an object of the present invention to provide an emergency solution for an unmanned petrol station which would overcome this problem and provides a technical solution in order to fulfil the emergency requirements.

According to the invention, a system as an emergency solution for the operation of an unmanned petrol station is provided. The system includes a manned emergency centre. The emergency centre can be operated 24 hours at seven days. Preferably, it can be operated at the operative headquarters or the IT-headquarters of the operator of the petrol stations and it can be connected to a fire department. It can be part of a fire department and/or fire departments can offer the operation of the emergency centre as an additional service. As a further alternative, the operation of the emergency centre can be outsourced to an IT-service supplier.

Furthermore, the solution includes an emergency cabinet. This is a combination of a communication unit for the communication with the emergency centre with the provisioning of firefighting materials.

The communication units can include audio and/or video communication. Some emergency shutdown buttons can be provided like a shutdown of the fuel supply, a shutdown of the complete electricity power supply at the forecourt and so on.

Materials can be first level firefighting means like fire extinguishers, buckets, fire extinguishing materials, blankets, and even protective clothing can be included. Furthermore, a first aid kit and other material which can be useful in case of a fire can be included.

A camera can be provided which allows the surveillance of the forecourt area. Preferably, this camera can be controlled by the emergency centre. Additionally, it can be of advantage if the emergency centre can remotely control the shutdown emergency buttons in addition to the person at the forecourt location.

To protect the emergency cabinet against misuse and vandalism, the cabinet can be closed and locked. The lock can be e.g. a solenoid-operated lock. This may be only or additionally controllable by the emergency centre.

In a further embodiment, the emergency cabinet can be data connected to a CCTV-supervision of the forecourt, and the unlocking and re-locking of the door can be controlled by an image processing software depending on the question whether there is at all a vehicle at the dispensers.

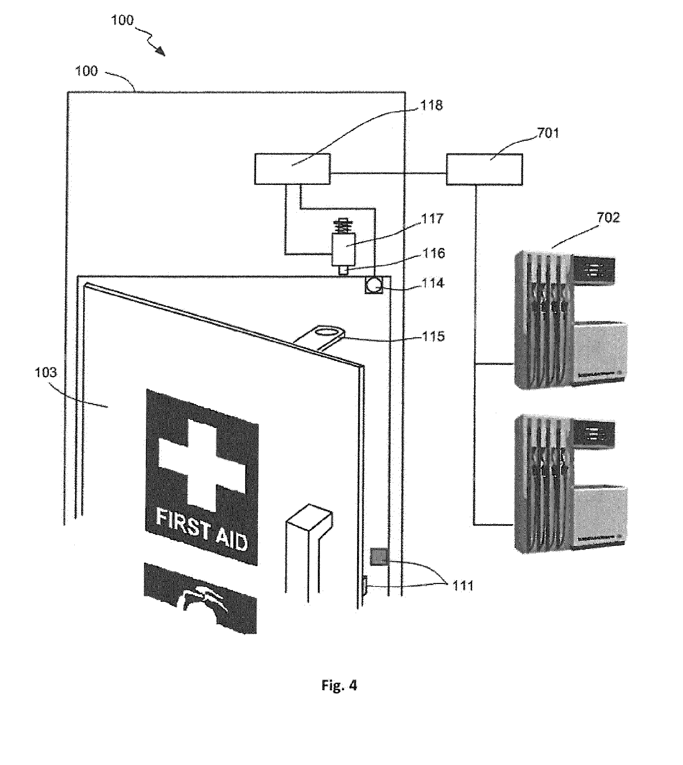

In still another embodiment, the unlocking of the door can be controlled by a combination of the forecourt interface described in figure 4 and the image processing of the CCTV: The door can be unlocked as soon as at least one dispenser on the forecourt is pumping petrol. The door can be re-locked after a latency time, as soon as no petrol pump on the forecourt is running anymore, or as soon as no vehicle is on the forecourt anymore.

With the invention an economic solution to operate an unmanned petrol station providing an emergency security is proposed. A trained person is not required on the forecourt. Any person available can be directed by the emergency centre. The emergency centre can be responsible for a plurality of unmanned petrol stations. Thereby, the operation of unmanned petrol stations can be enhanced. The solution requires the connection of the petrol station to an emergency centre and the provision of firefighting materials. So, even an untrained person can be directed via audio communications to e.g. press down some shutdown emergency buttons, to make use of some fist level firefighting means, to use protective clothing and so on. This will allow an immediate reaction in an emergency situation to cover the time until professional firefighting personnel arrives.

Further features and aspects of the invention are disclosed by the following description of the figures. Therein is shown:
Figure 1 depicts the exterior of an emergency cabinet with its door closed;
Figure 2 shows the emergency cabinet according to Figure 1 with its door opened;
Figure 3 shows network connections of a plurality of emergency cabinets to a common emergency centre; and
Figure 4 shows a further embodiment of the invented emergency cabinet.

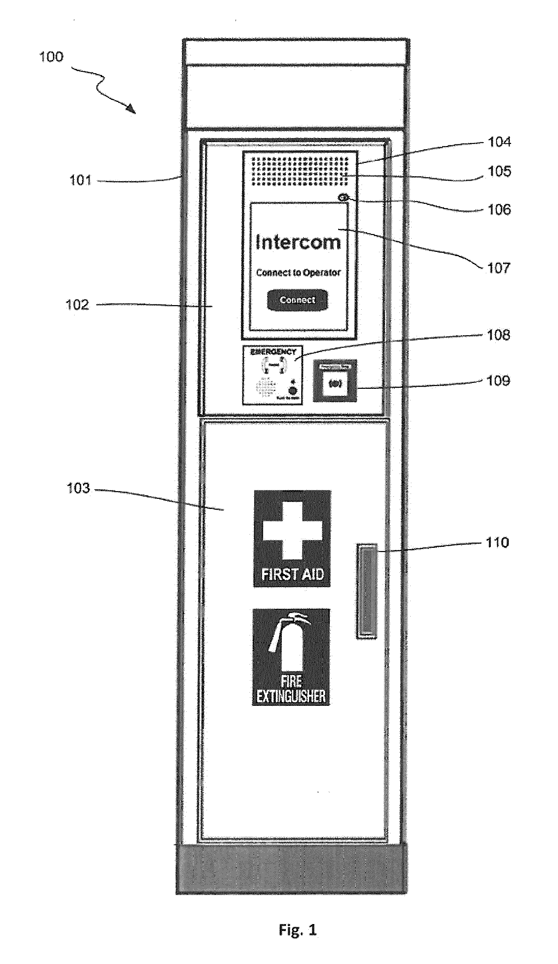

According to figure 1 the emergency cabinet 100 outwardly consists of a housing 101 suitable to be free-standingly mounted outdoor on a levelled concrete or carriageway surface, explicitly on the forecourt of a petrol station. The housing 101 is approximately 2 meters high.

The upper exterior of the housing 101 provides for a user interface 102, whereas the lower exterior of the housing provides for a door 103 which can be opened by a handle 110.

The user interface 102 consists of an intercom unit 104, equipped with a speaker 105, a pinhole camera and microphone 106, and a video screen. One embodiment of the video screen can be a touch screen 107 which can be used to activate the intercom unit 104. If the screen does not provide for touch-sensitivity, the intercom unit can alternatively be activated by a button (not shown).

As a fall back option to the intercom unit 104, the user interface 102 is additionally equipped with an analogue emergency phone 108.

Additionally, the user interface provides for an emergency stop button 109, covered by breakable glass. The emergency stop button 109 is electrically coupled to the power supply of the petrol dispensers on the forecourt. Upon breaking the glass and pushing the emergency button 109, the electrical power supply of the petrol dispensers will be interrupted immediately.

For installation in an outdoor environment, the upper part of the emergency cabinet can be equipped with suitable heating and / or ventilation equipment, which is not shown in the figures.

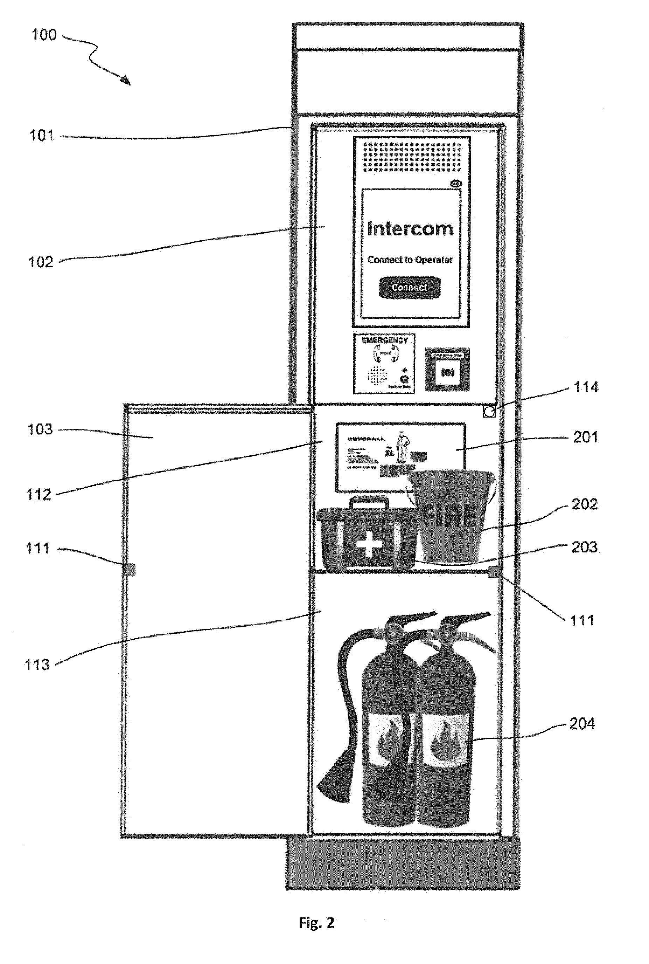

As it can be seen in Figure 2, when closed, the door 103 is held in closed position (but not locked) by a magnetic lock 111. The door 103 can be opened by pulling handle 110. Opening of the door is detected by door contact switch 114. The opening of the door is indicated at a remote emergency centre. To this end, the door contact switch 114 is connected either to a dry-contact of the intercom unit 102 and/or to controller unit. Activation of the door contact switch 114 causes the intercom unit to activate camera/microphone 106 and establish a live connection the remote emergency centre.

Behind the cabinet door 103, there is a compartment holding first-aid and firefighting equipment. The compartment is divided into two shelves. On the upper shelf 112, the following is stocked: a protective suit (201), a fire bucket (202) and a first-aid kit (203). On the lower shelf 113, at least one fire extinguisher 204 is stocked. Preferably, the lower shelf provides sufficient space for two fire extinguishers 204.

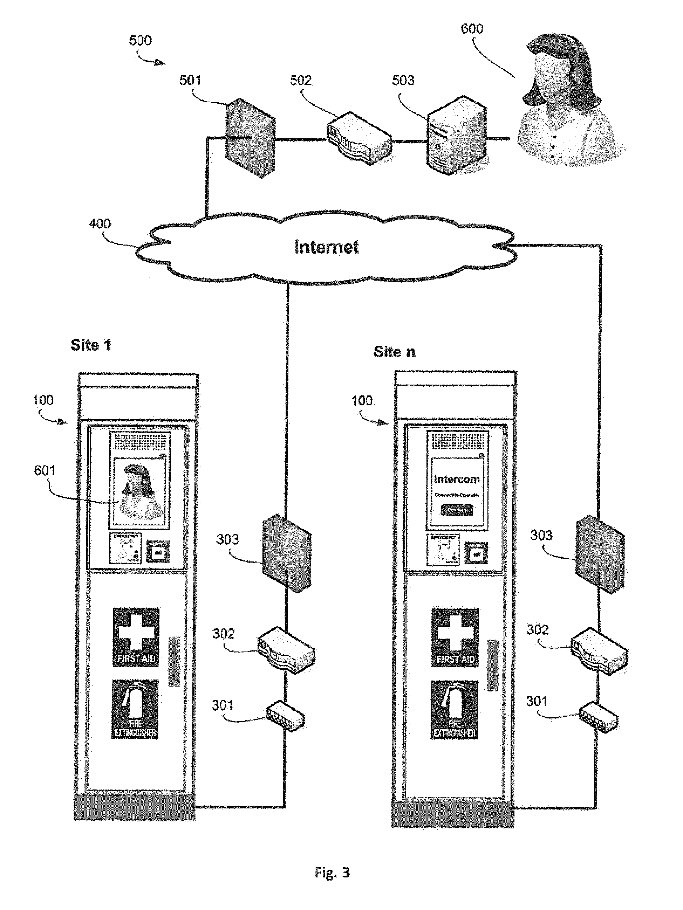

Figure 3 shows how a plurality of emergency cabinets 100 located at different sites can be connected to a common emergency centre 500. To this end, each emergency cabinet 100 is connected via a switch 301, router 302 and firewall 303 to the internet 400. The emergency centre 500 is also connected to the internet 400 by means of intercom server 503, router 502 and firewall 501.

This network connectivity permits a emergency centre agent 600 to establish via the intercom server 503 a live connection to the intercom unit of an emergency cabinet. In the example in Figure 3, the emergency cabinet at site 1 is live-connected to the agent 600, such that a live video 601 of the agent 600 can be seen on the screen of the intercom. A person standing in front of the emergency cabinet 100 at site 1 can see and hear the agent 600 in a live video conference; via-versa the agent 600 can see and hear site 1 via the camera/microphone 106 of the intercom unit.

As described above and shown in Figure 4, the door 103 of the emergency cabinet 100 is held in closed position by a magnetic lock 111. However, the door is not locked - i.e.: it can be opened at any time. In order to prevent abuse or vandalism in an unobserved environment, one specific embodiment of the emergency cabinet 100 is equipping it with a solenoid-operated lock 117, which is controlled by a controller unit 118. When the door 103 is in its normal closed position, the latch 116 is engaging with the door shackle 115, such that the door 103 cannot be opened.

The controller unit 118 is data-connected to a forecourt controller 701. The forecourt controller 701 can be any device that has a data interface to the dispensers at the forecourt. Specifically, the forecourt controller 701 can be a Point-Of-Sales-Terminal (POS) or a self-service payment kiosk or a configurable interface device to connect the forecourt to a Petrol Station Management System. The data interface between the forecourt controller 701 and the dispensers can be anyone known from the petrol stations industry, such as V.11, IFS-LON, Current Loop, Dart, ER3, EPS, 2Wire, ZRS83 or others as they evolve. The data interface between the forecourt controller 701 and the controller unit 118 can be TCP/IP or anyone known from the petrol stations industry, such as V.11, IFS-LON, Current Loop, Dart, ER3, EPS, 2Wire, ZRS83 or others as they evolve.

The controller unit 118 is programmed to open the solenoid-operated lock 117 as soon as the data signals from forecourt controller 701 indicate that at least one dispenser on the forecourt is pumping petrol. The controller unit 118 is further programmed to close the solenoid-operated lock 117 again after a latency time, as soon as no petrol pump on the forecourt is running anymore. The latency time is a parameter configurable in the operational data of the controller unit 118. Suggested typical latency times are around three to five minutes.

For example, the door 103 will remain locked as long as no fuelling takes place at the forecourt. The door 103 will be unlocked, as soon as any one of the dispensers on the forecourt starts dispensing petrol, and it will be locked again three minutes after the last fuelling on the forecourt has been finished

### Reference Numerals:

- 100: emergency cabinet
- 101: housing
- 102: user interface
- 103: door
- 104: intercom unit
- 105: speaker
- 106: camera / microphone
- 107: touch screen
- 108: emergency phone
- 109: emergency stop
- 110: door handle
- 111: magnetic lock
- 112: upper shelf
- 113: lower shelf
- 114: door contact switch
- 115: door shackle
- 116: latch
- 117: solenoid-operated lock
- 118: controller unit
- 201: protective suit
- 202: fire bucket
- 203: first-aid kit
- 204: fire-extinguisher
- 301: switch
- 302: router
- 303: firewall
- 400: internet
- 500: emergency centre
- 501: firewall
- 502: router
- 503: intercom server
- 600: emergency centre agent
- 601: live video
- 701: forecourt controller
- 702: fuel dispensers

## Claims

1. System to provide an emergency solution for the operation of unmanned petrol stations equipped with fuel dispensers on a forecourt accessible to road vehicles, the system including
a) a manned emergency centre and
b) an emergency cabinet at the site of the unmanned petrol station which cabinet includes communication units for the communication with the emergency centre and means for provisioning firefighting materials.

2. System according to claim 1 **characterized in that** the emergency centre is connected to a fire department.

3. System according to one of the preceding claims **characterized in that** the communication unit includes audio-communication devices.

4. System according to one of the preceding claims **characterized in that** the communication unit includes video-communication devices.

5. System according to any of the preceding claims **characterized by** a camera for surveillance of the forecourt of the petrol station.

6. System according to any of the preceding claims **characterized by** a fallback audio communication unit.

7. System according to any of the preceding claims **characterized by** an emergency stop button to stop any fuel dispensing.

8. System according to any of the preceding claims **characterized by** an emergency stop button to shut down the entire electrical power supply of the forecourt.

9. System according to any of the preceding claims **characterized in that** the firefighting materials include fist level firefighting means.

10. System according to any of the preceding claims **characterized in that** the firefighting materials include protective clothing.

11. System according to any of the preceding claims **characterized in that** the emergency cabinet is locked.

12. System according to any of the preceding claims **characterized in that** at least one of the camera, shut down emergency buttons and/or lock can be remotely controlled by the emergency centre.

13. Emergency cabinet to be used in a system for the operation of unmanned petrol stations equipped with fuel dispensers on a forecourt accessible to road vehicles, the cabinet including communication units for the communication with the emergency centre and means for provisioning firefighting materials.
